# EUROPÄISCHE PATENTSCHRIFT

(11) **EP 1 418 080 B1**
(45) Veröffentlichungstag und Bekanntmachung des Hinweises auf die Patenterteilung: **28.11.2007**
(21) Anmeldenummer: 03103590.0
(22) Anmeldetag: 29.09.2003
(51) Int. Cl.: B60K 15/035

(54) **Belüftungseinrichtung für einen Kraftstoffbehälter eines Kraftfahrzeuges**
Ventilation device for a refueling tank of a motor vehicle
Dispositif d'aération pour le réservoir à carburant d'un véhicule automobile

(30) Priorität: 08.11.2002 DE 10252506
(43) Veröffentlichungstag der Anmeldung: 12.05.2004
(73) Patentinhaber: Siemens VDO Automotive AG, 93055 Regensburg (DE)
(72) Erfinder: Essing, Martin, 46395, Bocholt (DE); Wundram, Kai, 40883, Ratingen (DE)

(56) Entgegenhaltungen:
- DE-A- 10 063 414
- DE-U- 20 019 968
- US-A1- 2002 157 715

## Beschreibung

Die Erfindung betrifft eine Belüftungseinrichtung für einen Kraftstoffbehälter eines Kraftfahrzeuges mit einem Ausperlbehälter zur Abscheidung von flüssigem Kraftstoff aus im Kraftstoffbehälter befindlichen Kraftstoffdämpfen und mit einem Entlüftungsventil zur Erzeugung eines Druckausgleichs des Ausperlbehälters mit der Umgebung.

Solche Entlüftungseinrichtungen werden in Kraftstoffbehältern heutiger Kraftfahrzeuge eingesetzt und sind aus der Praxis bekannt. Der Ausperlbehälter hat eine oder mehrere Verbindungen mit dem oberen Bereich des Kraftstoffbehälters, während das Ventil eine Verbindung mit der Umgebung aufweist. In der Verbindung mit der Umgebung wird meist ein Aktivkohlefilter eingesetzt. Hierdurch wird ein Druckausgleich zwischen dem Kraftstoffbehälter über den Ausperlbehälter und das Ventil zu der Umgebung ermöglicht. In dem Ventil ist meist ein Schwimmer angeordnet, welcher bei einem Kontakt mit Kraftstoff die Verbindung zur Umgebung schließt. Ein solcher Kontakt mit Kraftstoff kann beispielsweise bei einer starken Schrägstellung des Kraftfahrzeuges, einem Unfall, durch Fliehkräfte oder dergleichen auftreten. Bei der aus der Praxis bekannten Entlüftungseinrichtung ist das Ventil innerhalb des Ausperlbehälters angeordnet.

Eine Belüftungseinrichtung nach dem Oberbegriff des Anspruchs 1 wird in DE 10063414 A1 offenbart.

Nachteilig bei der bekannten Entlüftungseinrichtung ist, dass der Ausperlbehälter ein sehr großes Volumen benötigt, wenn ein ständiges Schließen des Ventils bei einem Schwappen des Kraftstoffs oder geringen Schräglagen vermieden werden soll. Zudem muss der größte Teil des Ausperlbehälters auch bei gefülltem Kraftstoffbehälter oberhalb des Kraftstoffspiegels angeordnet sein.

Der Erfindung liegt das Problem zugrunde, eine Entlüftungseinrichtung der eingangs genannten Art so weiterzubilden, dass sie ein ständiges Schließen des Ventils vermeidet.

Dieses Problem wird erfindungsgemäß durch die Merkmale des Anspruchs 1 gelöst.

Durch diese Gestaltung trennt die Wand den Ausperlbehälter von dem Ventil ab und verhindert damit ein Schwappen von Kraftstoff in die Öffnung des Ventils. Das Ventil der erfindungsgemäßen Entlüftungseinrichtung wird daher besonders selten schließen. Damit wird im Vergleich zu der bekannten Entlüftungseinrichtung bei gleicher Funktionalität die Entlüftung des Kraftstoffbehälters verbessert. Im einfachsten Fall ist die Wand eine Schwallschutzwand. Weiterhin wird dank der Erfindung im Vergleich zu der bekannten Entlüftungseinrichtung eine Verkleinerung des Volumens des Ausperlbehälters ermöglicht. Eine Verkleinerung des Volumens des Ausperlbehälters ermöglicht einen geringen Materialeinsatz zu seiner Herstellung, sowie ein größeres Nettovolumen des Kraftstoffbehälters.

Das Ventil wird auch bei einem hohen Füllstand an Kraftstoff im Ausperlbehälter vor einem Kontakt mit Kraftstoff geschützt, wenn das Entlüftungsventil in einer mit dem Ausperlbehälter verbundenen Kammer angeordnet ist.
Ein Eintrag von Kraftstoff in die Kammer bei einem Druckausgleich mit dem Ausperlbehälter lässt sich besonders gering halten, wenn die Verbindung der Kammer mit dem Ausperlbehälter eine nahe des Bodens angeordnete Drossel hat.

Die Drossel kann beispielsweise als Ventil, poröser Stopfen oder Klappe ausgebildet sein, wobei die Klappe besonders einfach mit einem Filmscharnier mit dem Ausperlbehälter verbunden ist. Die Drossel verlangsamt den Ausgleich der Flüssigkeitsspiegel des Ausperlbehälters mit der Kammer.

Der Füllstand an Kraftstoff in der Kammer wird gemäß einer anderen Weiterbildung der Erfindung besonders gering gehalten, wenn die Verbindung der Kammer mit dem Ausperlbehälter ein nahe des Bodens angeordnetes Rückschlagventil zur Drosselung oder Unterbindung der Befüllung der Kammer mit Kraftstoff und zur nahezu ungedrosselten Entleerung der Kammer in den Ausperlbehälter aufweist.

Bewegliche Teile der Drossel lassen sich gemäß einer anderen Weiterbildung der Erfindung einfach vermeiden, wenn die Drossel als Membran ausgebildet ist. Die Membran kann semipermeabel zur Verringerung eines Kraftstoffeintrags in die Kammer ausgebildet sein.

Eine separate Belüftung der Kammer erfordert gemäß einer anderen Weiterbildung der Erfindung einen besonders geringen baulichen Aufwand, wenn die Kammer in ihrem oberen Bereich eine Verbindung mit dem Ausperlbehälter hat. Da in dem oberen Bereich des Ausperlbehälters in der Regel kein flüssiger Kraftstoff ist, kann in der Regel auf eine Drossel in dieser Verbindung verzichtet werden.

Zur restlosen Entleerung der Kammer trägt es gemäß einer anderen Weiterbildung der Erfindung bei, wenn ein Boden des Ausperlbehälters geneigt ist und die Kammer am höchsten Punkt des Bodens angeordnet ist.

Die erfindungsgemäße Belüftungseinrichtung lässt sich besonders kostengünstig herstellen, wenn die Wand eine bauliche Einheit aus Ausperlbehälter und Kammer unterteilt. Weiterhin gestaltet sich die erfindungsgemäße Belüftungseinrichtung hierdurch besonders kompakt. Damit werden für die Belüftung erforderliche Lufteinschlüsse im Kraftstoffbehälter besonders klein gehalten.

Ein besonders großes Nettovolumen des Ausperlbehälters lässt sich gemäß einer anderen Weiterbildung der Erfindung einfach sicherstellen, wenn die Wand vertikal angeordnet ist.

Die zuverlässige Entleerung des Ausperlbehälters und/oder der Kammer erfordert gemäß einer anderen Weiterbildung der Erfindung einen besonders geringen Aufwand, wenn der Bodenbereich des Ausperlbehälters und/oder der Kammer mit dem Ansaugbereich einer Saugstrahlpumpe verbunden ist.

Der Ausperlbehälter und die Kammer könnten beispielsweise außerhalb des Kraftstoffbehälters angeordnet sein. Dies führt jedoch zu einer hohen Anzahl an Anschlüssen des Kraftstoffbehälters und zu einer großen Oberfläche von mit Kraftstoff gefüllten Bauteilen. Hierdurch entweichen durch Diffusion und Permeation Kraftstoffdämpfe in die Umgebung. Ein Eintrag von Kraftstoffdämpfen in die Umgebung wird gemäß einer anderen Weiterbildung der Erfindung besonders gering gehalten, wenn der Ausperlbehälter und die Kammer innerhalb des Kraftstoffbehälters angeordnet sind. Schwappbewegungen des in der Kammer befindlichen Kraftstoffs werden von dem Entlüftungsventil weitgehend ferngehalten, wenn die Kammer länglich gestaltet und mit ihrer längsten Erstreckung vertikal angeordnet ist.

Bei einer Schräglage oder ständigen Kurvenfahrt des Kraftfahrzeuges lässt sich gemäß einer anderen vorteilhaften Weiterbildung der Erfindung ein Eintrag von Kraftstoff aus dem Ausperlbehälter in die Kammer einfach vermeiden, wenn die Kammer mittig im Ausperlbehälter angeordnet ist.

Die Erfindung lässt zahlreiche Ausführungsformen zu. Zur weiteren Verdeutlichung ihres Grundprinzips sind drei davon in der Zeichnung dargestellt und werden nachfolgend beschrieben. Diese zeigt in
- Fig. 1: eine schematische Schnittdarstellung durch einen Kraftstoffbehälter mit einer erfindungsgemäßen Belüftungseinrichtung,
- Fig. 2: eine weitere Ausführungsform der erfindungsgemäßen Belüftungseinrichtung,
- Fig. 3: eine weitere Ausführungsform der erfindungsgemäßen Belüftungseinrichtung.

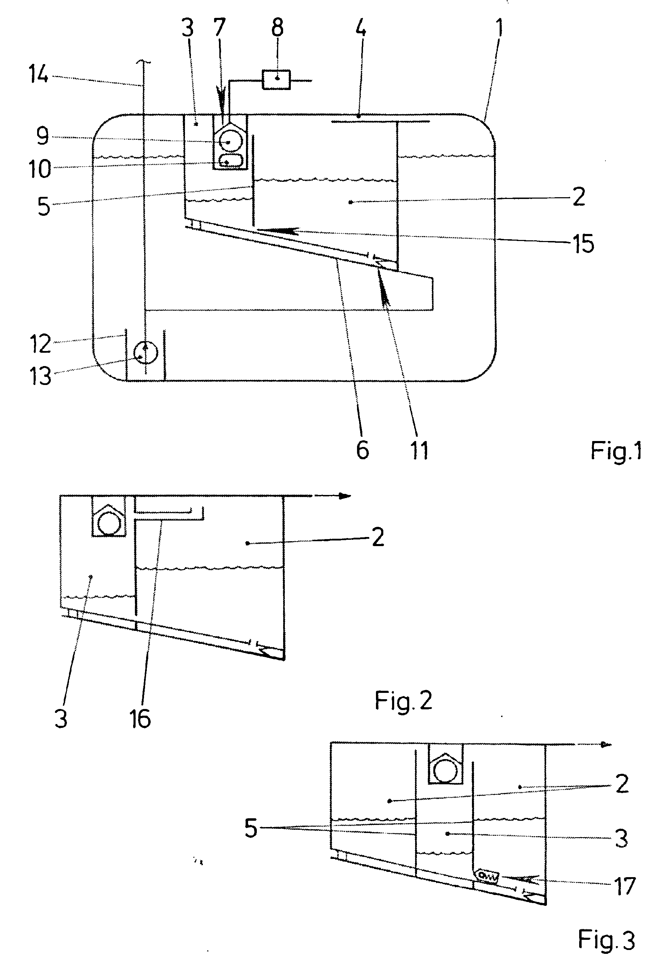

Figur 1 zeigt eine Belüftungseinrichtung für einen Kraftstoffbehälter 1 eines Kraftfahrzeuges. In dem Kraftstoffbehälter 1 ist eine bauliche Einheit aus Ausperlbehälter 2 und einer Kammer 3 angeordnet. Der Ausperlbehälter 2 ist über einen Kanal 4 mit dem oberen Bereich des Kraftstoffbehälters 1 verbunden. Selbstverständlich kann der Ausperlbehälter 2 mehrere Kanäle 4 für jeden Entlüftungspunkt des Kraftstoffbehälters aufweisen. Die Kammer 3 ist über eine Wand 5 von dem Ausperlbehälter 2 getrennt. Ein gemeinsamer Boden 6 des Ausperlbehälters 2 und der Kammer 3 ist geneigt angeordnet, wobei sich die Kammer 3 an der höchsten Stelle des Bodens 6 befindet. In der Kammer 3 ist ein Entlüftungsventil 7 angeordnet, welches die Kammer 3 über einen Aktivkohlefilter 8 mit der Umgebung verbindet. Das Entlüftungsventil 7 hat einen Schwimmer 9 mit einer geringeren Dichte als Kraftstoff und einen unterhalb des Schwimmers 9 angeordneten Sinkkörper 10 mit einer wesentlich höheren Dichte als Kraftstoff. Bei einem besonders hohen Füllstand an Kraftstoff in der Kammer 3 schließt der Schwimmer 9 die Verbindung mit der Umgebung. Bei einem Überschlag des Kraftfahrzeuges drückt der Sinkkörper 10 den Schwimmer 9 in die die Verbindung mit der Umgebung schließende Position. Weiterhin ist in dem Boden 6 des Ausperlbehälters 2 eine Saugstrahlpumpe 11 angeordnet, welche Kraftstoff aus dem Ausperlbehälter 2 absaugt. Die Saugstrahlpumpe 11 wird von einer in einem Schwalltopf 12 angeordneten Kraftstoffpumpe 13 mit Kraftstoff als Treibmittel versorgt. Die Kraftstoffpumpe 13 fördert zudem Kraftstoff über eine Vorlaufleitung 14 zu einer nicht dargestellten Brennkraftmaschine des Kraftfahrzeuges.

Nahe des Bodens 6 hat die Wand 5 eine Drossel 15 zur Verbindung des Ausperlbehälters 2 mit der Kammer 3. In ihrem oberen Bereich hat die Wand 5 zudem eine Verbindung der Kammer 3 mit dem Ausperlbehälter 2. Ist der Füllstand an Kraftstoff in der Kammer 3 höher als in dem Ausperlbehälter 2 kann Kraftstoff aus der Kammer 3 abfließen. Wenn der Füllstand an Kraftstoff in der Kammer 3 jedoch geringer ist als in dem Ausperlbehälter 2, wird der Eintrag von Kraftstoff in die Kammer 3 über die Drossel 15 gebremst. Die Drossel 15 kann hierfür ein nicht dargestelltes Rückschlagventil, ein poröser Stopfen, eine Klappe oder eine semipermeable Membran aufweisen.

Figur 2 zeigt eine weitere Ausführungsform der Belüftungseinrichtung, welche sich von der aus Figur 1 vor allem dadurch unterscheidet, dass die Kammer 3 mit einem in den oberen Bereich des Ausperlbehälters 2 geführten Kanal 16 verbunden ist. Der Kanal 16 endet in der Mitte des Ausperlbehälters 2 und damit oberhalb des Flüssigkeitsschwerpunktes des Kraftstoffs im Ausperlbehälter 2. Dies trägt zur weiteren Verringerung des Eintrags von Kraftstoff in die Kammer 3 bei, wenn der in Figur 1 dargestellte Kraftstoffbehälter schräggestellt wird oder wenn beispielsweise bei einer Kurvenfahrt des Kraftfahrzeuges Kraftstoff im Ausperlbehälter zu einer Seite hin gedrückt wird.

Figur 3 zeigt eine weitere Ausführungsform der Belüftungseinrichtung, bei der die Kammer 3 im Flüssigkeitsschwerpunkt des Ausperlbehälters 2 angeordnet ist. Damit wird vermieden, dass bei einer großen Schräglage des in Figur 1 dargestellten Kraftstoffbehälters übermäßig viel Kraftstoff in die Kammer 3 eindringen kann. Nahe des Bodens der Wand 5 ist ein Rückschlagventil 17 angeordnet, welches eine einfache Entleerung der Kammer 3 in den Ausperlbehälter 2 ermöglicht, jedoch ein Eindringen von Kraftstoff in die Kammer 3 verhindert.

## Patentansprüche

1. Belüftungseinrichtung für einen Kraftstoffbehälter eines Kraftfahrzeuges mit einem Ausperlbehälter (2) zur Ausscheidung von flüssigem Kraftstoff aus im Kraftstoffbehälter befindlichen Kraftstoffdämpfen und mit einem Entlüftungsventil (7) zur Erzeugung eines Druckausgleichs des Ausperlbehälters (2) mit der Umgebung, **dadurch gekennzeichnet, dass** das Entlüftungsventil (7) in einer von dem Ausperlbehälter (2) über eine Wand (5) getrennte Kammer (3) angeordnet ist, sodass der Ausperlbehälter (2) mit der Kammer (3) verbunden ist, wobei die Verbindung der Kammer (3) mit dem Ausperlbehälter (2) eine nahe des Bodens (6) angeordnete Drossel (15) hat.

2. Belüftungseinrichtung nach zumindest einem der vorhergehenden Ansprüche, **dadurch gekennzeichnet, dass** die Verbindung der Kammer (3) mit dem Ausperlbehälter (2) ein nahe des Bodens angeordnetes Rückschlagventil (17) aufweist, welches in Befüllrichtung der Kammer (3) eine stärkere Drosselwirkung besitzt als in Entleerungsrichtung in den Ausperlbehälter (2).

3. Belüftungseinrichtung nach zumindest einem der vorhergehenden Ansprüche, **dadurch gekennzeichnet, dass** die Drossel (15) als Membran, vorzugsweise als semipermeable Membran, als Klappe oder poröser Stopfen ausgebildet ist.

4. Belüftungseinrichtung nach zumindest einem der vorhergehenden Ansprüche, **dadurch gekennzeichnet, dass** die Kammer (3) in ihrem oberen Bereich eine Verbindung mit dem Ausperlbehälter (2) hat.

5. Belüftungseinrichtung nach zumindest einem der vorhergehenden Ansprüche, **dadurch gekennzeichnet, dass** ein Boden (6) des Ausperlbehälters (2) geneigt ist.

6. Belüftungseinrichtung nach zumindest einem der vorhergehenden Ansprüche, **dadurch gekennzeichnet, dass** die Kammer (3) am höchsten Punkt des Bodens (6) angeordnet ist.

7. Belüftungseinrichtung nach zumindest einem der vorhergehenden Ansprüche, **dadurch gekennzeichnet, dass** die Wand (5) vertikal angeordnet ist.

8. Belüftungseinrichtung nach zumindest einem der vorhergehenden Ansprüche, **dadurch gekennzeichnet, dass** der Bodenbereich des Ausperlbehälters (2) und/oder der Kammer (3) mit dem Ansaugbereich einer Saugstrahlpumpe (11) verbunden ist.

9. Belüftungseinrichtung nach zumindest einem der vorhergehenden Ansprüche, **dadurch gekennzeichnet, dass** der Ausperlbehälter (2) und die Kammer (3) innerhalb des Kraftstoffbehälters (1) angeordnet sind.

10. Belüftungseinrichtung nach zumindest einem der vorhergehenden Ansprüche, **dadurch gekennzeichnet, dass** die Kammer (3) länglich gestaltet und mit ihrer längsten Erstreckung vertikal angeordnet ist.

11. Belüftungseinrichtung nach zumindest einem der vorhergehenden Ansprüche, **dadurch gekennzeichnet, dass** die Kammer (3) mittig im Ausperlbehälter (2) angeordnet ist.

## Claims

1. Ventilation device for a refuelling tank of a motor vehicle, with a bubble tank (2) for separating out liquid fuel from fuel vapours located in the refuelling tank, and with a venting valve (7) for producing an equalization of the pressure of the bubble tank (2) with the surroundings, **characterized in that** the venting valve (7) is arranged in a chamber (3), which is separated from the bubble tank (2) by a wall (5), and therefore the bubble tank (2) is connected to the chamber (3), the connection of the chamber (3) to the bubble tank (2) having a throttle (15) arranged in the vicinity of the base (6).

2. Ventilation device according to at least one of the preceding claims, **characterized in that** the connection of the chamber (3) to the bubble tank (2) has a nonreturn valve (17) which is arranged in the vicinity of the base and has a greater throttling action in the filling direction of the chamber (3) than in the emptying direction into the bubble tank (2).

3. Ventilation device according to at least one of the preceding claims, **characterized in that** the throttle (15) is designed as a membrane, preferably as a semipermeable membrane, as a flap or porous stopper.

4. Ventilation device according to at least one of the preceding claims, **characterized in that** the upper region of the chamber (3) has a connection to the bubble tank (2).

5. Ventilation device according to at least one of the preceding claims, **characterized in that** a base (6) of the bubble tank (2) is inclined.

6. Ventilation device according to at least one of the preceding claims, **characterized in that** the chamber (3) is arranged at the highest point of the base (6).

7. Ventilation device according to at least one of the preceding claims, **characterized in that** the wall (5) is arranged vertically.

8. Ventilation device according to at least one of the preceding claims, **characterized in that** the base region of the bubble tank (2) and/or of the chamber (3) is/are connected to the intake region of a suction jet pump (11).

9. Ventilation device according to at least one of the preceding claims, **characterized in that** the bubble tank (2) and the chamber (3) are arranged within the refuelling tank (1).

10. Ventilation device according to at least one of the preceding claims, **characterized in that** the chamber (3) is of elongated design and its longest extent is arranged vertically.

11. Ventilation device according to at least one of the preceding claims, **characterized in that** the chamber (3) is arranged centrally in the bubble tank (2).

## Revendications

1. Dispositif de ventilation pour réservoir à carburant de véhicule automobile, comportant un compartiment (2) de condensation de la mousse, où se condense du carburant liquide contenu dans les vapeurs de carburant se trouvant dans le réservoir à carburant, et une soupape de ventilation (7) destinée à assurer une compensation de pression entre le compartiment (2) de condensation de la mousse et le milieu ambiant, **caractérisé par le fait que** la soupape de ventilation (7) est placée dans une chambre (3) séparée du compartiment (2) de condensation de la mousse par une paroi (5), de telle sorte que le compartiment (2) de condensation de la mousse est relié à la chambre (3), la liaison entre la chambre (3) et le compartiment (2) de condensation de la mousse comportant un organe d'étranglement (15) placé à proximité du fond (6).

2. Dispositif de ventilation selon au moins l'une des revendications précédentes, **caractérisé par le fait que** la liaison entre la chambre (3) et le compartiment (2) de condensation de la mousse comporte une soupape de non-retour (17) placée à proximité du fond et qui a un effet d'étranglement plus important dans le sens du remplissage de la chambre (3) que dans le sens de l'écoulement de la chambre (3) vers le compartiment (2) de condensation de la mousse.

3. Dispositif de ventilation selon au moins l'une des revendications précédentes, **caractérisé par le fait que** l'organe d'étranglement (15) est conçu sous la forme d'une membrane, d'une façon préférentielle, d'une membrane semi-perméable, d'un clapet ou d'un bouchon poreux.

4. Dispositif de ventilation selon au moins l'une des revendications précédentes, **caractérisé par le fait que** la chambre (3) est, dans sa partie supérieure, en liaison avec le compartiment (2) de condensation de la mousse.

5. Dispositif de ventilation selon au moins l'une des revendications précédentes, **caractérisé par le fait qu'**un fond (6) du compartiment (2) de condensation de la mousse est incliné.

6. Dispositif de ventilation selon au moins l'une des revendications précédentes, **caractérisé par le fait que** la chambre (3) est placée au point le plus élevé du fond (6).

7. Dispositif de ventilation selon au moins l'une des revendications précédentes, **caractérisé par le fait que** la paroi (5) est verticale.

8. Dispositif de ventilation selon au moins l'une des revendications précédentes, **caractérisé par le fait que** la zone du fond du compartiment (2) de condensation de la mousse et/ou de la chambre (3) est en liaison avec la zone d'aspiration d'une pompe à jet aspirant (11).

9. Dispositif de ventilation selon au moins l'une des revendications précédentes, **caractérisé par le fait que** le compartiment (2) de condensation de la mousse et la chambre (3) sont disposés à l'intérieur du réservoir à carburant (1).

10. Dispositif de ventilation selon au moins l'une des revendications précédentes, **caractérisé par le fait que** la chambre (3) a une forme allongée et que son extension la plus longue est verticale.

11. Dispositif de ventilation selon au moins l'une des revendications précédentes, **caractérisé par le fait que** la chambre (3) est placée au milieu du compartiment (2) de condensation de la mousse.
